# EUROPEAN PATENT APPLICATION

(11) **EP 1 887 469 A2**
(43) Date of publication of application: **13.02.2008**
(21) Application number: 07013795.5
(22) Date of filing: 13.07.2007
(51) Int. Cl.: G06F 11/07

(54) **Automated support notification**

(30) Priority: 26.07.2006 US 492962
(71) Applicant: Hewlett-Packard Development Company, L.P., Houston, TX 77070 (US)
(72) Inventor: Togari, Srinivasu, Mt. Laurel NJ 08054 (US); Shaughnessy, Jay, Mt. Laurel NJ 08054 (US); Halim, Salman, Mt. Laurel NJ 08054 (US); McCune, Michael, Mt. Laurel NJ 08054 (US)
(74) Representative: Schoppe, Fritz

(57) **Abstract**

A method of providing an automated support notification is described. The method comprises receiving a support request 208 identifying a problem and querying a data store 122 for a solution 210 related to the support request 208. The method further comprises generating a solution request if the querying a data store 122 for a solution 210 fails to identify a solution 210 and receiving at least a reference to a solution 210. The method further comprises transmitting at least the received reference to the solution 210 based on at least one support request 208 identified by querying the data store 122 for a support request 208 related to at least a portion of the solution 210.

## Description

### Background

Many computer-based programs and operating systems provide error messages in the event of a problem arising during operation of the computer. The problem may be a software and/or hardware fault occurring on the computer. The error messages range from useful to cryptic as to whether they provide usable information to a user of the computer. A user is then able to search support information provided by vendors (oftentimes in the form of a knowledge base) for possible solutions to the event or error causing the problem. If the user fails to find a relevant possible solution, the user must repeat the search periodically to find possible solutions newly-provided by the vendor.

### Description of the Drawings

The present invention is illustrated by way of example, and not by limitation, in the figures of the accompanying drawings, wherein elements having the same reference numeral designations represent like elements throughout and wherein:
FIG. 1 is an exemplary high level block diagram of a network architecture within which embodiments of the present invention are used to advantage;
FIG. 2 is a detailed functional block diagram of an embodiment of a support server;
FIG. 3 is a process flow diagram of a portion of the support server according to an embodiment;
FIG. 4 is a process flow diagram of a portion of the support server according to another embodiment;
FIG. 5 is a process flow diagram of a portion of the support server according to another embodiment;
FIG. 6 is a process flow diagram of a portion of the support server according to an embodiment;
FIG. 7 is a high-level functional block diagram of a computer system usable in conjunction with embodiments of the present invention; and
FIG. 8 is a process flow diagram of a portion of the support server according to another embodiment.

### Detailed Description

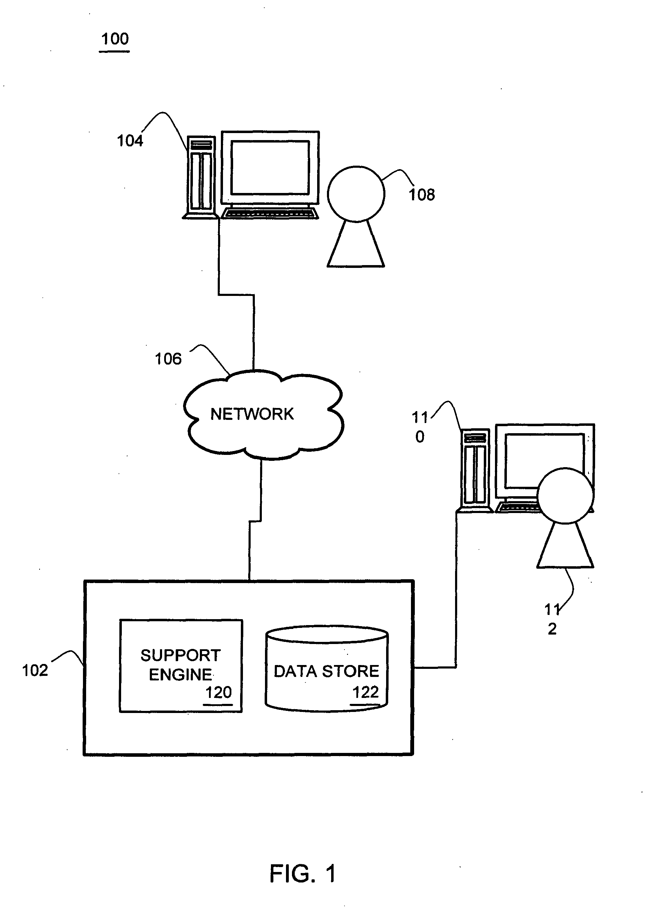

FIG. 1 depicts a high-level block diagram of a network architecture 100 comprising a support server 102, e.g., a vendor-provided computer system supplying support information and/or services to users and/or computers, a client computer 104, and a network 106 connecting the support server and the client computer. A user 108 interacts with client computer 104. A support terminal 110 is connected with support server 102 and a support technician 112 interacts with the support terminal.

Support server 102 is a computer system comprising a support engine 120 and a data store 122. Support engine 120 provides functionality for enabling client computer 104 and support terminal 110 to interact with support server 102, and more specifically, data store 122. In accordance with some embodiments, user 108 and/or technician 112 may interact with support server 102 using client computer 104 and terminal 110, respectively.

User 108 manipulates client computer 104 to communicate with support server 102 via network 106 and to request support information corresponding to a problem the user has encountered on the client computer. In accordance with some embodiments, client computer 104 may automatically communicate with support server 102 based on a problem being identified by a component of the client computer. In some embodiments, the identifying component may be a software or hardware-based component, e.g., an application, agent, background process, and/or a portion of the operating system. The problem on the client computer may be a hardware and/or software fault or error.

Network 106 communicatively couples client computer 104 and support server 102. In some embodiments, network 106 may be one or more of a direct connection, a wired connection, and a wireless connection.

Support terminal 110 is a computer system with which technician 112 interacts to cause the generation of solutions to identified problems. In some embodiments, support terminal 110 is integrated as a part of support server 102. In at least some embodiments, support terminal 110 is a thin client terminal providing an interface for technician 112 to interact with functionality at support server 102. In some embodiments, support terminal 110 automatically analyses identified problems from client computer 104 for solution generation. Support terminal 110 is communicatively connected with support server 102 via one or more of wired and/or wireless connections.

Support terminal 110 communicates with support server 102 and causes support server 102 to store generated solutions in data store 122. In at least some embodiments, support terminal 110 stores generated solutions directly in data store 122.

Support engine 120 communicates with client computer 104 via network 106 to receive support requests generated by the client computer and transmit solutions to the client computer. In at least some embodiments, support request 208 may comprise information collected at client computer 104, e.g., an error message, log file, system information, etc. Support engine 120 interacts with data store 122 to store support requests received from client computer 104 and query the data store for solutions to the received support requests. In at least some embodiments, solution 210 may comprise a document describing a problem and suggesting corrective and/or recovery actions to be taken to fix the problem. Solution 210 may comprise a software patch, a known problem identification, an enhancement request, a bug report, a corrected bug report, a solution instruction set, etc. Support engine 120 communicates with support terminal 110 to transmit received support requests and receive solutions at least some of which correspond to a received support request.

Data store 122 stores support requests received from client computer 104 and solutions received from support terminal 110, as well as, existing solutions which may or may not have been received from the support terminal.

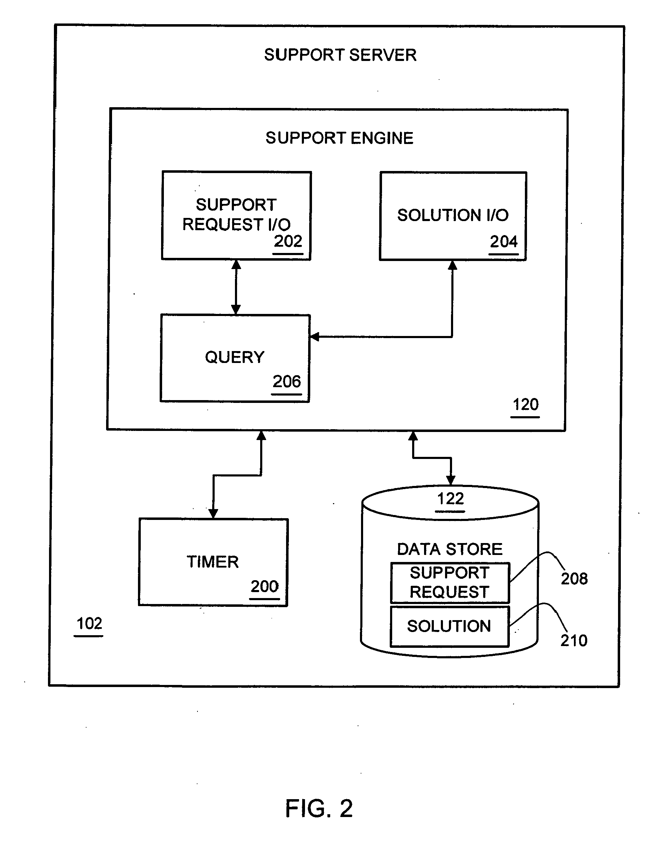

FIG. 2 depicts a detailed functional block diagram of an embodiment of support server 102 comprising support engine 120, data store 122, and a timer 200. In at least some embodiments, timer 200 is a part of support engine 120. In still further embodiments, timer 200 is an optional component and is not present in support server 102.

Support engine 120 comprises a support request input/output (I/O) interface 202, a solution I/O interface 204, and a query component 206. Support request I/O interface 202 receives a support request from client computer 104 and transmits the received support request to support terminal 110. Solution I/O interface 204 receives a solution from support terminal 110 and transmits the solution to client computer 104. Support request I/O interface 202 and solution I/O interface 204, respectively, store a support request 208 and a solution 210 in data store 122.

In at least some embodiments, support request I/O interface 202 and solution I/O interface 204 may be combined into a single component for enabling client computer 104 and/or support terminal 110 to interact with support engine 120, e.g., the combined component may be a web site interface.

Query component 206 receives a support request from client computer 104 and performs a query of data store 122 for a relevant solution 210. If a relevant solution 210 is identified, query component 206 transmits the solution to solution I/O interface 204 for subsequent transmission of the solution to client computer 104. If a relevant solution 210 is not found, query component 206 stores support request 208 in data store 122 and transmits the support request to support terminal 110. In some embodiments, if query component 206 fails to identify a relevant solution to the support request, the query component stores the support request 208 in data store 122. In some further embodiments, if query component 206 fails to identify a relevant solution, the query component stores the support request 208 in data store 122 and transmits a notification of the pending support request 208 to support terminal 110.

In at least some embodiments, query component 206 identifies relevant solutions based on a comparison of keywords from support request 208. For example, a ratio or other comparison mechanism may be used to determine whether a particular solution is more or less relevant to other solutions. A predetermined relevancy threshold may be applied as a cutoff in determining relevancy of query results. Similarly, relevant support requests 208 may be identified based on a comparison of keywords from solution 210. Keywords may comprise a product identifier, a product version, an operating system identifier, an operating system version, etc.

Query component 206 receives a solution 210 from support terminal 110 and stores the solution in data store 122. Query component 206 performs a query of data store 122 for a relevant support request 208 corresponding to solution 210. If a relevant support request 208 is identified, query component 206 transmits the solution to solution I/O interface 204 for subsequent transmission of the solution to client computer 104. Solution I/O interface 204, in some embodiments, transmits a notification of solution 210 to client computer 104.

In some embodiments, query component 206, having identified at least one support request 208 relevant to solution 210, may perform a query of data store 122 for additional solutions relevant to the identified support request 208. In this manner, all relevant solutions may be provided to client computer 104. Further, in some embodiments, data store 122 stores an indication of solutions 210 previously provided in response to a support request 208 in order to minimize the possibility of repetitive solutions being provided to the client computer. The indication of previously provided solutions may be stored in support request 208 or in data store 122 separate from the support request.

In some embodiments, timer 200 periodically causes query component 206 to perform a query of data store 122 for a solution 210 corresponding to stored support request 208. In this manner, support server 102 periodically checks for a solution to a submitted support request. In some embodiments, support engine 120 sets timer 200 based on a timer value submitted as part of support request 208. In some embodiments, support engine 120 sets timer 200 based on a default timer value for submitted support requests. In still further embodiments, support server 102 comprises more than one timer and support engine 120 sets a timer for each received support request 208, either based on information in the support request or based on a timer value for submitted support requests.

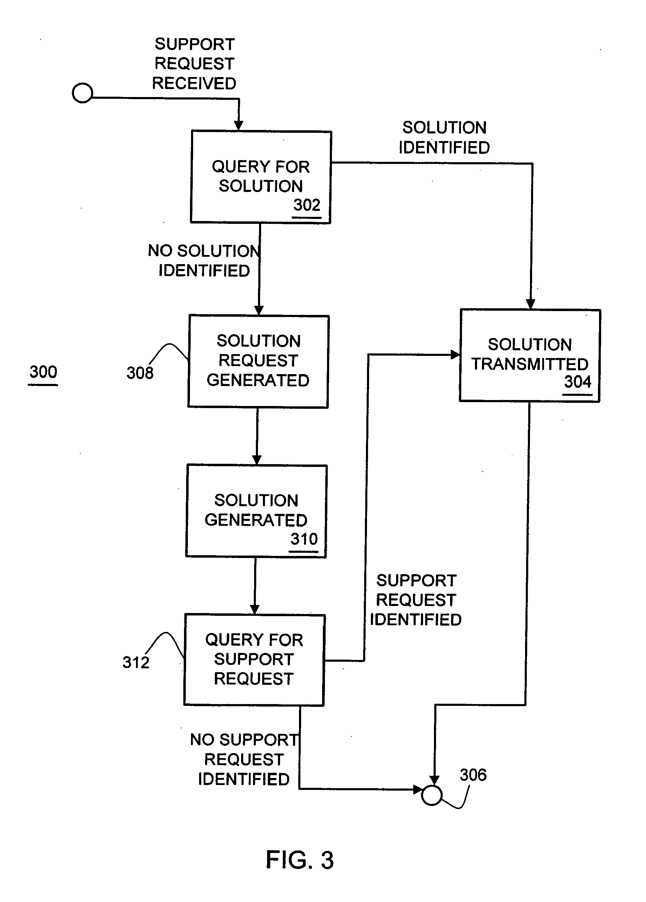

FIG. 3 depicts a process flow diagram of a portion 300 of support server 102 functionality according to an embodiment. A processor in support server 102 executing one or more instructions causes the processor to perform the process flow functionality portion 300 of FIG. 3. After receipt of a support request 208 from client computer 104, process flow functionality portion 300 proceeds to query for a relevant solution 210 in data store 122 (query for solution 302). For example, query component 206 queries data store 122 responsive to receipt of support request 208 from client computer 104.

If a solution 210 relevant to the queried support request 208 is identified in data store 122, the flow proceeds to transmit the identified solution (solution transmitted 304) to client computer 104. The flow then proceeds to complete portion 300 by proceeding to end 306.

In some embodiments, support engine 120 transmits the contents of identified solution 210 to client computer 104. In at least some embodiments, support engine 120 transmits a reference to identified solution 210, e.g., a hyperlink, to client computer 104. In still further embodiments, support engine 120 transmits a notification to client computer 104 indicating that an identified solution 210 is stored in data store 122.

If a solution 210 relevant to the queried support request 208 is not identified in data store 122, the flow proceeds to generate a solution request and transmit the solution request to support terminal 110. The solution request comprises at least some information relevant to the problem identified by support request 208. In some embodiments, the solution request comprises support request 208. In at least some embodiments, support engine 120 stores a copy of the transmitted solution request in data store 122.

After a solution 210 relevant to the queried support request 208 is generated and received by support server 102 (solution generated 310), the flow proceeds to query data store 122 for the originating support request 208 (query for support request 312). For example, query component 206 performs a query on data store 122 for the originating support request 208 based on information in solution 210. In some embodiments, support engine 120 may cache a copy of the originating support request 208 for use upon generation of a solution. In some further embodiments, query component 206 may perform a query on data store 122 for one or more support requests which are relevant to the generated solution 210. According to this embodiment, if a given solution 210 potentially solves more than one problem, support requests 208 related to each of the problems will be identified.

If a support request 208 is identified by query 312, the flow proceeds to solution transmitted 304 and the flow proceeds as described above. If, however, a support request 208 is not identified by query 312, the flow proceeds to end 306.

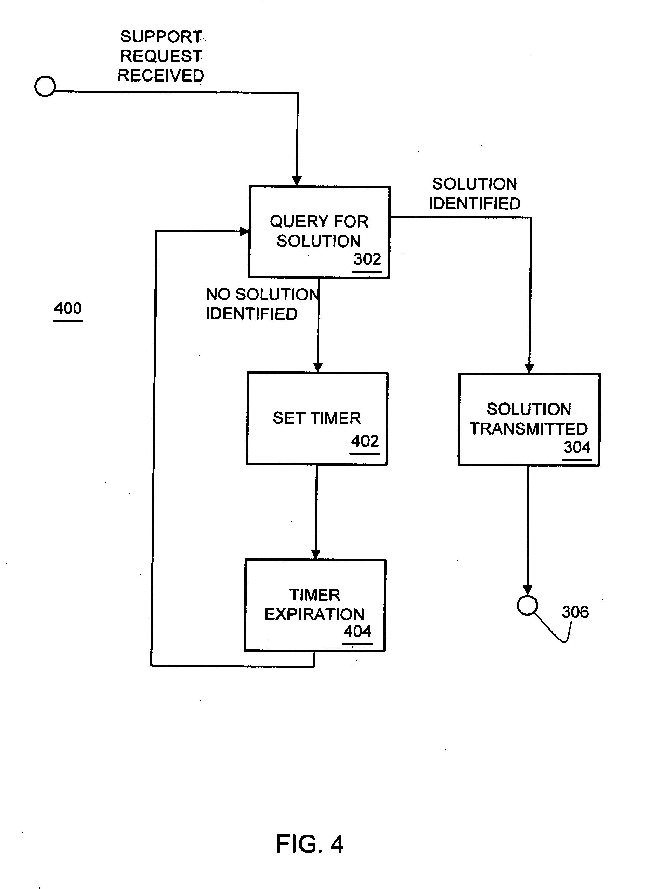

FIG. 4 depicts a process flow diagram of a portion 400 of support server 102 functionality according to another embodiment. A processor in support server 102 executing one or more instructions causes the processor to perform the process flow functionality portion 400 of FIG. 4. After receipt of a support request 208 from client computer 104, process flow functionality portion 400 proceeds to query for a relevant solution 210 in data store 122 (query for solution 302), as described above with reference to FIG. 3.

Similar to the above description, of FIG. 3, if a solution 210 relevant to the queried support request 208 is identified in data store 122, the flow proceeds to transmit the identified solution (solution transmitted 304) to client computer 104. The flow then proceeds to complete portion 300 by proceeding to end 306.

If a solution 210 relevant to the queried support request 208 is not identified in data store 122, the flow proceeds to set a timer (set timer 402), e.g., timer 200 (FIG. 2). Timer 200 is set based on a predetermined timer value in support request 208. In some embodiments, timer 200 is set based on a default timer value for received support requests 208. In some embodiments, timer 200 may be a count-down, count-up, or other type of timer.

After timer 200 expires (timer expiration 404), the flow proceeds to return to query for solution 302 and the flow proceeds as described above. In this manner, if a solution 210 to a support request 208 is not identified in data store 122, the query (302) may be performed again on a periodic basis until a solution 210 is identified. In some embodiments, a counter may limit the number of times a timer may be set for a particular support request 208. If the counter is exceeded, the flow may proceed to end 306.

In at least some embodiments, more than one timer 200 may be used to set a timer for more than one support request 208. In still further embodiments, support server 102 may transmit a notification to client computer 104 indicating that a solution was not identified and that the query will be repeated.

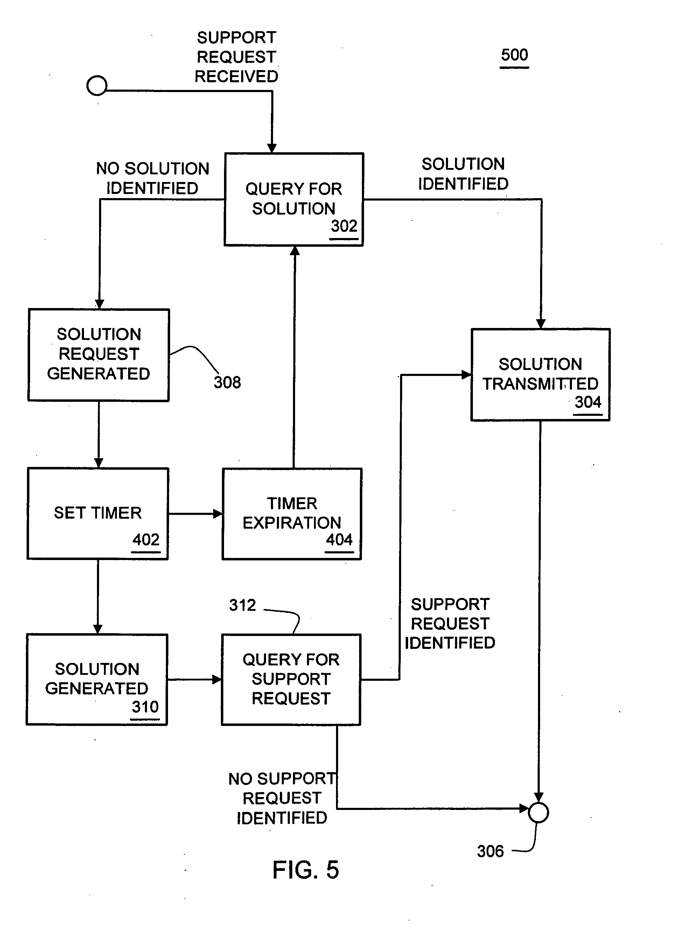

FIG. 5 depicts a process flow diagram of a portion 500 of support server 102 functionality according to another embodiment. A processor in support server 102 executing one or more instructions causes the processor to perform the process flow functionality portion 500 of FIG. 5. After receipt of a support request 208 from client computer 104, process flow functionality portion 500 proceeds to query for a relevant solution 210 in data store 122 (query for solution 302), as described above with reference to FIG. 3.

Similar to the above description of FIG. 3, if a solution 210 relevant to the queried support request 208 is identified in data store 122, the flow proceeds to transmit the identified solution (solution transmitted 304) to client computer 104. The flow then proceeds to complete portion 300 by proceeding to end 306.

If a solution 210 relevant to the queried support request 208 is not identified in data store 122, the flow proceeds to generate a solution request (solution request generated 308) and transmit the solution request to support terminal 110. The solution request comprises at least some information relevant to the problem identified by support request 208. In some embodiments, the solution request comprises support request 208. In at least some embodiments, support engine 120 stores a copy of the transmitted solution request in data store 122.

In some embodiments, prior to generating a solution request, support engine 120 determines whether a solution request has been previously generated. If a solution request has been generated, the flow of control proceeds to set a timer (set timer 402, FIG. 4). If a solution request has not been previously generated, a solution request is generated as described and the flow of control proceeds to set a timer (set timer 402, FIG. 4).

The flow proceeds to set a timer (set timer 402, FIG. 4), e.g., timer 200 (FIG. 2). Timer 200 is set based on a predetermined timer value in support request 208. In some embodiments, timer 200 is set based on a default timer value for received support requests 208. In some embodiments, timer 200 may be a count-down, count-up, or other type of timer.

After timer 200 expires (timer expiration 404, FIG. 4), the flow proceeds to return to query for solution 302 and the flow proceeds as described above. In this manner, if a solution 210 to a support request 208 is not identified in data store 122, the query (302, FIG. 3) may be performed again on a periodic basis until a solution 210 is identified. In some embodiments, a counter may limit the number of times a timer may be set for a particular support request 208. If the counter is exceeded, the flow may proceed to end 306.

In at least some embodiments, more than one timer 200 may be used to set a timer for more than one support request 208. In still further embodiments, support server 102 may transmit a notification to client computer 104 indicating that a solution was not identified and that the query will be repeated.

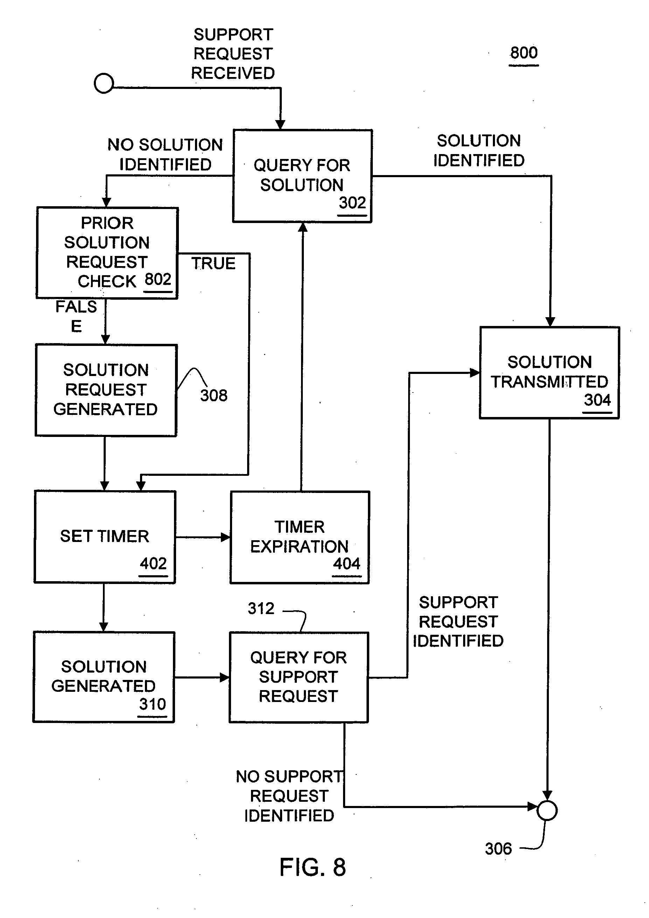

In at least some embodiments, if a solution 210 to a support request 208 is not identified in data store 122, support engine 120 determines whether a solution request has been previously generated. If a solution request has been generated, the flow of control proceeds to set a timer (set timer 402, FIG. 4). If a solution request has not been previously generated, a solution request is generated as described and the flow of control proceeds to set a timer (set timer 402, FIG. 4). FIG. 8 depicts a process flow diagram of a portion 800 of support server 102 functionality according to another embodiment. A processor in support server 102 executing one or more instructions causes the processor to perform the process flow functionality portion 800 of FIG. 8. As described immediately above, process flow portion 800 differs from the process flow diagram of FIG. 5 in that a check is performed (prior solution request check 802) prior to generating a solution request (solution request generated, FIG. 5). Support engine 120 determines whether a solution request has been previously generated. If a solution request has been generated, the flow of control proceeds to set timer 402 and if not, the flow of control proceeds to solution request generated 308.

If, prior to timer 200 expiration, a solution 210 is generated (solution generated 310, FIG. 3) and received by support engine 120, the flow proceeds to query data store 122 for the originating support request 208 (query for support request 312, FIG. 3). For example, query component 206 performs a query on data store 122 for the originating support request 208 based on information in solution 210. In some embodiments, support engine 120 may cache a copy of the originating support request 208 for use upon generation of a solution. In some further embodiments, query component 206 may perform a query on data store 122 for one or more support requests which are relevant to the generated solution 210. According to this embodiment, if a given solution 210 potentially solves more than one problem, support requests 208 related to each of the problems will be identified.

If a support request 208 is identified by query 312, the flow proceeds to solution transmitted 304 and the flow proceeds as described above. If, however, a support request 208 is not identified by query 312, the flow proceeds to end 306.

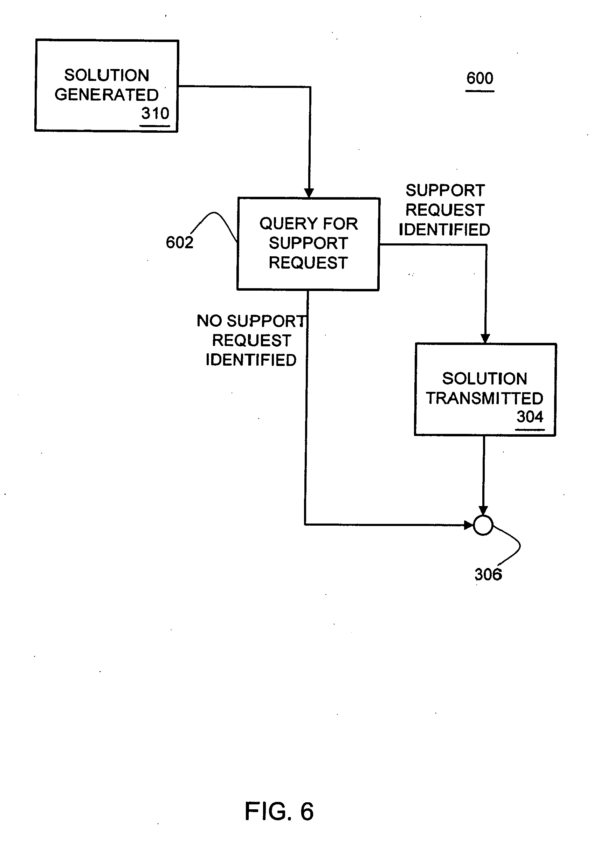

FIG. 6 depicts a process flow diagram of a portion 600 of support server 102 functionality according to another embodiment. A processor in support server 102 executing one or more instructions causes the processor to perform the process flow functionality portion 600 of FIG. 6. After a solution is generated (solution generated 310, FIG. 3) as described above, the flow proceeds to query for a relevant support request 208 corresponding to solution 210 (query for support request 602). For example, query component 206 performs a query on data store 122 for one or more support requests 208 based on information in solution 210. As described above, support engine 120 stores the generated solution 210 in data store 120.

If a support request 208 is identified by query 602, the flow proceeds to solution transmitted 304 and the flow proceeds as described above. If, however, a support request 208 is not identified by query 602, the flow proceeds to end 306.

In this manner, as support server 102 receives generated solutions 210, query component 206 queries data store 122 for stored support requests 208 relevant to the generated solution. For example, if technician 112 operating support terminal 110 generates a solution 210 which is relevant to one or more problems, the support terminal transmits the solution to support server 102 for storage in data store 122. Support server 102 then queries data store 122 for stored support requests 208 relevant to the solution 210 and transmits the solution to client computers 104 based on information in the support request.

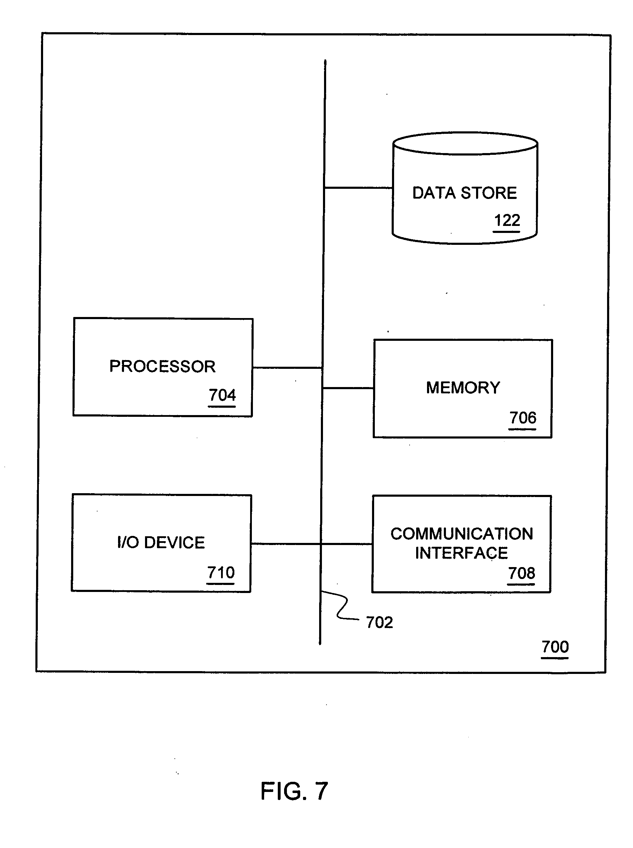

FIG. 7 depicts a high level functional block diagram of a computer system 700, e.g., support server 102, within which embodiments of the present invention are used to advantage. Computer system 700 comprises a bus 702 or other communication mechanism, and a processor 704 coupled with the bus. Computer system 700 also comprises a memory 706, such as a random access memory (RAM) or other volatile or non-volatile storage device, coupled to bus 702 for storing data and instructions to be executed by processor 704. Memory 706 also may be used for storing temporary variables or other intermediate information during execution of instructions to be executed by processor 704. In at least some embodiments, computer system 700 further comprises a read only memory (ROM) or other static storage device coupled to bus 702 for storing static information and instructions for processor 704.

Further, instructions may be provided by a computer-readable medium connected to computer system 700 and/or by downloading via communication interface 708. The computer-readable medium may include a floppy disk, a flexible disk, hard disk, magnetic tape, or any other magnetic medium, a compact disc-read only memory (CD-ROM), any other optical medium, punch cards, paper tape, any other physical medium with patterns of holes, a random access memory (RAM), a programmable read only memory (PROM), an electrically programmable ROM (EPROM), a FLASH-EPROM, any other memory chip or cartridge, a carrier wave embodied in an electrical, electromagnetic, infrared, or optical signal, or any other medium from which a computer can read.

Data store 122, such as a magnetic-based memory, an electronic-based memory, or an optical-based memory, is provided and coupled to bus 702 for storing data and instructions for computer system 700. In at least one embodiment, data store 122 stores information and an operating system and/or other executable software. In some embodiments, data store 122 is a non-volatile read/write device such as a hard drive, flash memory, etc. In some embodiments, computer system 700 comprises, either physically or logically, more than one data store. Computer system 700 is depicted as having a single data store 122 ; however, in other embodiments there may be more than one data store and the data store may comprise devices other than hard drives.

Computer system 700 is communicatively coupled via bus 702 to an input/output device 710 (I/O device), for example a touch-screen display, for displaying information to a user and receiving commands from the user. I/O device 710 may include alphanumeric and function keys for communicating information and command selections to processor 704 from a user. In some embodiments, I/O device 710 comprises a plurality of individual devices directed to either or both input and output interactions between a user and computer system 700. For example, an output I/O device may include a display such as a cathode ray tube or a flat panel display while an input I/O device may include a keyboard and/or a cursor control such as a mouse, a trackball, a trackpad, or cursor direction keys for communicating direction information and command selections to processor 704 and for controlling cursor movement on an output I/O device.

Computer system 700 further comprises a communication interface 708 coupled to bus 702 for one-way and two-way network communication. Communication interface 708 sends and receives electrical, electromagnetic or optical signals which carry digital data streams representing various types of information. Communication interface 708 may be an integrated services digital network (ISDN) card, a digital subscriber line (DSL) card, a modem to provide a data communication connection to a corresponding type of telephone line, or as another example, communication interface 708 may be a local area network (LAN) card to provide a data communication connection to a compatible LAN. Communication interface 708 may also implement wireless links.

## Claims

1. A method of providing an automated support notification, the method comprising:
receiving a support request 208 identifying a problem;
querying a data store 122 for a solution 210 related to the support request 208;
generating a solution request if the querying a data store 122 for a solution 210 fails to identify a solution 210;
receiving at least a reference to a solution 210; and
transmitting at least the received reference to the solution 210 based on at least one support request 208 identified by querying the data store 122 for a support request 208 related to at least a portion of the solution 210.

2. A method according to claim 1, further comprising:
setting a timer 200 if the querying a data store 122 for a solution 210 results in no solution 210; and
performing the querying a data store 122 for a solution 210 in response to the timer 200 reaching a predetermined timer value.

3. A method according to claim 2, further comprising:
transmitting at least the reference to the solution 210 related to the support request 208 for each solution 210 identified as a result of querying the data store 122 for a solution 210.

4. A method according to claim 1, wherein the transmitting comprises:
transmitting at least the reference to the solution 210 based on at least a portion of the support request 208.

5. A method of providing an automated support notification based on one or more stored support requests, the method comprising:
generating a solution 210; and
transmitting at least a reference to the generated solution 210 based on a support request 208 identified by querying a data store 122 for one or more support requests related to a received solution 210.

6. A method according to claim 5, further comprising:
receiving a support request 208; and
wherein the generating a solution 210 is performed in response to a failed query of a data store 122 for a solution 210 based on the received support request 208.

7. A method according to claim 5, wherein the generating a solution 210 comprises:
performing an analysis of a problem identified in one or more support requests.

8. A method according to claim 5, wherein the transmitting is not performed if the querying a data store 122 for one or more support requests related to the received solution 210 fails to identify a support request 208.

9. A memory or a computer-readable medium storing instructions which, when executed by a processor 704, cause the processor 704 to generate a solution 210 and transmit at least a reference to the solution 210, wherein the transmitting is performed based on a support request 208 identified by querying a data store 122 for a support request 208 related to a received solution 210.

10. A memory or a computer-readable medium according to claim 9, further comprising instructions which, when executed by a processor 704, cause the processor 704 to receive a support request 208 and wherein the generating a solution 210 is performed in response to a failed query of a data store 122 for a solution 210 based on the received support request 208.
